# EUROPÄISCHE PATENTANMELDUNG

(11) **EP 2 987 834 A1**
(43) Veröffentlichungstag der Anmeldung: **24.02.2016**
(21) Anmeldenummer: 14002863.0
(22) Anmeldetag: 18.08.2014
(51) Int. Cl.: C09C 1/36, C09C 3/06

(54) **Verfahren zur Oberflächenbeschichtung von anorganischen Partikeln mit Siliciumdioxid und mindestens einer weiteren anorganischen Verbindung**

(71) Anmelder: Kronos International, Inc., 51373 Leverkusen (DE)
(72) Erfinder: Beyer, Norbert, 50226 Frechen (DE); Fidalgo-Estevez, Jud-R., 52146 Wuerselen (DE); Frahm, Heiko, 51375 Leverkusen (DE); Blümel, Siegfried, 40883 Ratingen (DE)

(57) **Zusammenfassung**

Die Erfindung betrifft ein Verfahren zur Oberflächenbeschichtung von anorganischen Partikeln in wässriger Phase, insbesondere von Titandioxidpigment-Partikeln mit einer dichten Siliciumdioxid-Hülle und mindestens einer weiteren anorganischen Verbindung, insbesondere mit Aluminiumoxid, wobei die Beschichtung weitgehend aus separaten Schichten besteht.

Das Verfahren zeichnet sich dadurch aus, dass die Partikel nach Aufbringen der Siliciumdioxidschicht aus der Suspension abgetrennt, gewaschen und wärmebehandelt werden und anschließend erneut zu einer wässrigen Suspension angeteigt und mit mindestens einer weiteren anorganischen Verbindung beschichtet werden. Die Wärmebehandlung findet bevorzugt bei Temperaturen von 400 bis 800°C statt. Erfindungsgemäß mit SiO₂ und Al₂O₃ behandelte Titandioxidpigment-Partikel zeichnen sich durch verbessertes Aufhellvermögen, eine verringerte Säurelöslichkeit und einem zu höheren pH-Werten verschobenen isoelektrischen Punkt aus.

## Beschreibung

### Gebiet der Erfindung

Die Erfindung betrifft ein Verfahren zur Oberflächenbeschichtung von anorganischen Partikeln, insbesondere von Titandioxidpigment-Partikeln mit einer dichten Siliciumdioxid-Hülle und mindestens einer weiteren anorganischen Verbindung, insbesondere mit Aluminiumoxid.

### Technologischer Hintergrund der Erfindung

Anorganische Partikel, insbesondere anorganische Pigmentpartikel werden vielfach oberflächenbehandelt, um bestimmte Eigenschaften zu verändern, beispielsweise Oberflächenladung, Dispergiereigenschaften, Säure- oder Lichtbeständigkeit. Insbesondere Titandioxid ist wegen seines hohen Lichtbrechungsindexes ein hochwertiges und in vielen Bereichen eingesetztes Pigment wie z.B. in Beschichtungen, Kunststoffen oder Fasern und Papier. Allerdings ist Titandioxid photoaktiv, d.h. durch die Einwirkung von ultravioletten Strahlen entstehen über Elektron-Loch-Paare freie Radikale an der Oberfläche, die mit den in der umgebenden Matrix vorhandenen Stoffen Reaktionen eingehen können, was zur Zerstörung dieser Matrix führen kann.

Ein üblicher Weg, um die Photoaktivität der Titandioxidpartikel zu verringern d.h. die photochemische Stabilität zu erhöhen, ist die Umfüllung der Partikel mit einer möglichst dichten amorphen Siliciumdioxid-Schicht, einer sogenannten "dense skin", die verhindern soll, dass sich freie Radikale an der Oberfläche bilden. Allerdings ist ebenfalls bekannt, dass die dichte SiO₂-Hülle Aufhellvermögen (TS), Glanz und Dispergierbarkeit der Pigmentpartikel beeinträchtigt. Üblicherweise werden die Pigmentpartikel deswegen nach Aufbringen der dichten SiO₂-Hülle mit Aluminiumoxid behandelt.

Weiterhin sind aus dem Stand der Technik verschiedene Verfahren bekannt, um die Oberflächenbehandlung mit dichter Siliciumdioxid-Hülle und Aluminiumoxid weiter zu optimieren. Beispielsweise offenbart DE 1 467 492 ein Verfahren zur Verbesserung von sowohl Aufhellvermögen wie Glanz als auch photochemischer Stabilität von Titanoxid, bei dem die Pigmentpartikel zweifach mit SiO₂ und Al₂O₃ oberflächenbeschichtet werden und abschließend einer Wärmebehandlung bei 700°C unterzogen werden.

Es wird allgemein angenommen, dass die Verbesserung von Aufhellvermögen, Glanz und Dispergierbarkeit von mit dichter SiO₂-Hülle und anschließende Al₂O₃-Behandlung versehenen Pigmenten durch veränderte Oberflächeneigenschaften - Zetapotential bzw. isoelektrischer Punkt (IEP) - verursacht wird. Bekanntermaßen liegt der isoelektrische Punkt bei Aluminiumoxidoberflächen bei einem pH-Wert von etwa 9 im Gegensatz zu Siliciumdioxidoberflächen, deren isoelektrischer Punkt bei einem pH-Wert von etwa 2 liegt. Oberflächenanalytische Untersuchungen zeigen jedoch, dass die bekannten Verfahren zur sequentiellen Fällung einer inneren dichten SiO₂-Schicht und einer äußeren Al₂O₃-Schicht keine klar getrennten separaten Schichten erzeugen. Vielmehr wird Al₂O₃ in die SiO₂-Schicht eingebaut, so dass sich eine Mischschicht aus SiO₂ und Al₂O₃ bildet. Dieser Befund wird unterstützt durch Messergebnisse des Zetapotentials bzw. des isoelektrischen Punkts der Partikel. Der isoelektrische Punkt von Pigmentoberflächen, die mit einer dichten SiO₂-Hülle versehen und anschließend mit Al₂O₃ behandelt wurden, liegt üblicherweise bei einem pH-Wert von deutlich unter 9.

Es besteht somit Bedarf für ein Verfahren, mit Hilfe dessen separate Schichten von anorganischen Verbindungen auf die Oberfläche anorganischer Partikel, die eine dichte SiO₂-Hülle aufweisen, aufgebracht werden können.

### Figuren

Figur 1: EDX-Linienscan für eine Probe gemäß Vergleichsbeispiel.
Figur 2: EDX-Linienscan für eine Probe gemäß Beispiel 4.

### Aufgabenstellung und Kurzbeschreibung der Erfindung

Der Erfindung liegt die Aufgabe zugrunde, ein Verfahren anzugeben, mit Hilfe dessen die Oberfläche von anorganischen Partikeln mit einer dichten Siliciumdioxidschicht und mit mindestens einer weiteren separaten Schicht einer anorganischen Verbindung versehen werden kann. Insbesondere liegt die Aufgabe darin, eine möglichst reine, geschlossene Al₂O₃-Schicht als abschließende Schicht auf die Oberfläche von Titandioxidpigment-Partikeln, die zuvor mit einer dichten SiO₂-Hülle versehen worden waren, aufzubringen. Die Aufgabe wird gelöst durch ein Verfahren zur Oberflächenbeschichtung von anorganischen Partikeln in einer wässrigen Suspension mit einer dichten Siliciumdioxidschicht und mindestens einer weiteren anorganischen Verbindung dadurch gekennzeichnet, dass die Partikel nach Aufbringen der Siliciumdioxidschicht aus der Suspension abgetrennt, gewaschen und wärmebehandelt werden und anschließend erneut zu einer wässrigen Suspension angeteigt und mit mindestens einer weiteren anorganischen Verbindung beschichtet werden.

Weitere vorteilhafte Ausführungsformen der Erfindung sind in den Unteransprüchen angegeben.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Im Rahmen der Erfindung werden unter Siliciumoxid, Aluminiumoxid oder anderen Metalloxiden auch die jeweiligen wasserhaltigen Formen wie z.B. Hydroxide, Oxidhydrate etc. verstanden.

Das erfindungsgemäße Verfahren geht aus von einer wässrigen Suspension anorganischer Partikel. Bei den Partikeln handelt es sich beispielsweise um Titandioxid, Zirkonoxid, Eisenoxid und andere. Bevorzugt sind erfindungsgemäß Pigmentpartikel, insbesondere Titandioxidpigmentpartikel.

Die Titandioxidpigmentpartikel sind nach üblichen Verfahren hergestellt, beispielsweise dem Sulfatverfahren oder dem Chloridverfahren. Die mittlere Partikelgröße liegt üblicherweise im Bereich von 0,2 bis 0,5 µm.

Die unbehandelten Partikel werden zu einer wässrigen Suspension angeteigt und bevorzugt in einer Rührwerksmühle deagglomeriert, gegebenenfalls unter Zusatz eines üblichen Dispergiermittels.

Um eine dichte Siliciumdioxidhülle aufzubringen, wird die Suspension üblicherweise auf einen pH-Wert im Bereich von 10 bis 12 eingestellt, und anschließend wird eine alkalische Silikatlösung zugegeben. Anschließend wird der pH-Wert auf unter 9 abgesenkt und Siliciumdioxid gefällt. Entsprechende Verfahrensweisen sind beispielsweise in EP 1 771 519 B1 offenbart. Dem Fachmann sind diese Verfahren bekannt.

In einer besonderen Ausführung der Erfindung enthält die dichte SiO₂-Hülle weitere Metallionen wie beispielsweise in EP 1 771 519 B1 oder WO 2007/085493 A2 beschrieben.

Nach Auffällung der dichten SiO₂-Hülle auf die Partikeloberfläche werden die Partikel erfindungsgemäß aus der Suspension abgetrennt und gewaschen.

Die aufgefällte Hülle enthält bevorzugt 1,5 bis 6 Gew.-% SiO₂ bezogen auf Gesamtpartikel, insbesondere 2 bis 4 Gew.-%.

Nachfolgend werden die Partikel einer Wärmebehandlung unterzogen. Bevorzugt findet die Wärmebehandlung bei Temperaturen über 100°C, insbesondere zwischen 200°C und 850°C und besonders bevorzugt zwischen 400 und 800°C statt. Als Aggregate eigenen sich beispielsweise übliche Apparate wie Sprühtrockner, Trockenschrank, Etagentrockner, Vibrations-Wirbelschichttrockner, Muffelofen oder Drehrohrofen. Die Dauer der Wärmebehandlung variiert in Abhängigkeit von der gewählten Temperatur und dem Apparat zwischen wenigen Minuten und mehreren Stunden.

In einer besonderen Ausführung der Erfindung werden die Partikel zwei- oder mehrstufig wärmebehandelt, beispielsweise werden sie zunächst bei Temperaturen von >100°C getrocknet und anschließend bei höheren Temperaturen wärmebehandelt.

Bevorzugt werden die Pigmentpartikel zunächst in einem Sprühtrockner getrocknet und anschließend in einem Etagentrockner oder Muffelofen wärmebehandelt.

Nachfolgend werden die Partikel erneut zu einer wässrigen Suspension angeteigt, deagglomeriert und mindestens eine Schicht einer anorganischen Verbindung durch Zugabe einer entsprechenden Salzlösung und Fällung der entsprechenden Verbindung auf die Partikeloberfläche nach bekannten Verfahren aufgebracht.

Bevorzugt enthalten die ausgewählten anorganischen Verbindungen Aluminium, Elemente der 2. Hauptgruppe oder der Nebengruppen oder Kombinationen davon. Geeignet sind beispielsweise die Elemente aus der Gruppe der Lanthaniden.

Insbesondere ist die weitere anorganische Verbindung ausgewählt aus der Gruppe der Oxide, Hydroxide, Carbonate, Phosphate und Sulfide oder Kombinationen davon.

In einer besonderen Ausführung der Erfindung handelt es sich um Aluminiumoxid.

Zur Fällung von Aluminiumoxid wird als Metallsalzlösung bevorzugt Natriumaluminat verwendet. Geeignet sind auch Aluminiumsulfat, Aluminiumchlorid, etc. Bevorzugt wird 1 bis 10 Gew.-% insbsbesondere 2 bis 4 Gew.-% Aluminiumsalzlösung gerechnet als Al₂O₃ und bezogen auf Gesamtpartikel, eingesetzt.

Abschließend werden die Partikel in bekannter Weise aus der Suspension abgetrennt, gewaschen, getrocknet und gegebenenfalls mikronisiert.

### Beispiele

Die Erfindung wird anhand der folgenden Beispiele genauer beschrieben, ohne dass dadurch der Umfang der Erfindung eingeschränkt werden soll.

### Vergleichsbeispiel

Eine wässrige Suspension von Titandioxid-Grundkörper (hergestellt nach dem Chloridverfahren) mit einer Konzentration von 450 g/L wurde in einer Sandmühle deagglomeriert und anschließend auf einen pH-Wert von 10 und eine Konzentration von 350 g/L TiO₂ eingestellt. Anschließend wurde eine Natrium-Wasserglaslösung mit einer Konzentration von 100 g/L SiO₂ in einer Menge von 2,8 Gew.% gerechnet als SiO₂ und bezogen auf TiO₂-Grundkörper innerhalb von 20 Minuten unter Rühren zugegeben. Nachfolgend wurde eine Lösung von Titanoxychlorid mit einer Konzentration von 140 g/L TiO₂ in einer Menge von 0,2 Gew.-% gerechnet als TiO₂ und bezogen auf TiO₂-Grundkörper innerhalb von 60 Minuten unter Rühren hinzugegeben. Anschließend wurde HCl (Konzentration 345 g/L) innerhalb von 60 Minuten unter Rühren in einer Menge zugegeben, dass ein pH-Wert von 4 erreicht wurde, währenddessen sich eine SiO₂-Schicht auf der Partikeloberfläche bildete.

Anschließend wurden Natriumaluminatlösung mit einer Konzentration von 260 g/L Al₂O₃ in einer Menge von 2,3 Gew.-% gerechnet als Al₂O₃ und bezogen auf TiO₂ sowie gleichzeitig HCl zugegeben, wobei der pH-Wert konstant bei etwa 4 blieb. Anschließend wurde Natriumaluminatlösung mit einer Konzentration von 260 g/L Al₂O₃ in einer Menge von 0,2 Gew.-% gerechnet als Al₂O₃ und bezogen auf TiO₂ zugegeben, so dass sich ein pH-Wert von etwa 5,7 einstellte.

Nachfolgend wurde der Feststoff durch Filtration abgetrennt, 3 Stunden mit kaltem VE-Wasser gewaschen und 16 Stunden bei 160°C getrocknet. Abschließend wurden die Partikel unter Zugabe von Trimethylolpropan (TMP) in einer Dampfstrahlmühle mikronisiert.

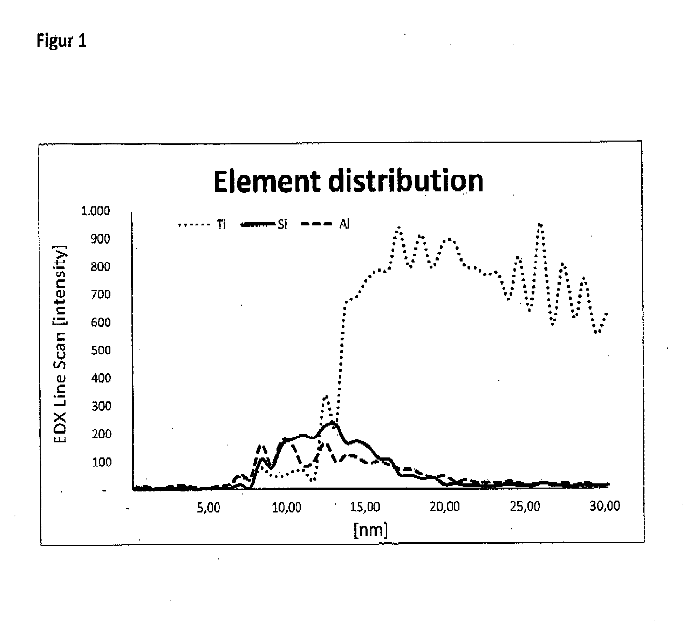

Die Partikel wurden unter dem Rasterelektronenmikroskop (REM) untersucht und ein 30 nm langer EDX-Linienscan senkrecht zur Partikeloberfläche durch Partikelkern und Partikeibeschichtung aufgenommen (Figur 1).

### Beispiel 1

Wie das Vergleichsbeispiel mit dem Unterschied, dass zwischen der SiO₂-Beschichtung und der Al₂O₃-Beschichtung folgende Verfahrensschritte eingeschoben wurden:
Der Feststoff wurde durch Filtration abgetrennt und 3 Stunden mit kaltem VE-Wasser gewaschen. Die erzeugte Filterpaste wurde bei einer Temperatur von 160°C sprühgetrocknet.

Die sprühgetrocknete Filterpaste wurde anschließend erneut zu einer wässrigen Suspension mit 450 g/L Feststoff angeteigt und in einer Rührwerksmühle (PM5 mit Ottawasand 20/30) mit einem Durchsatz von 10 kg/h und ohne pH-Werteinstellung und ohne Dispergiermittelzugabe deagglomeriert.

Nachfolgend wurde die TiO₂-Suspension erneut auf 350 g/L TiO₂ verdünnt und auf einen pH-Wert von 4 eingestellt. Anschließend wurde mit der Zugabe der Natriumaluminatlösung fortgefahren.

### Beispiel 2

Wie Beispiel 1 mit dem Unterschied, dass nach der Sprühtrocknung zusätzlich eine zweistündige Wärmebehandlung bei 400°C erfolgte.

### Beispiel 3

Wie Beispiel 1 mit dem Unterschied, dass nach der Sprühtrocknung zusätzlich eine einstündige Wärmebehandlung bei 800°C erfolgte.

### Beispiel 4

Wie Beispiel 1 mit dem Unterschied, dass nach der Sprühtrocknung zusätzlich eine vierstündige Wärmebehandlung bei 800°C erfolgte.

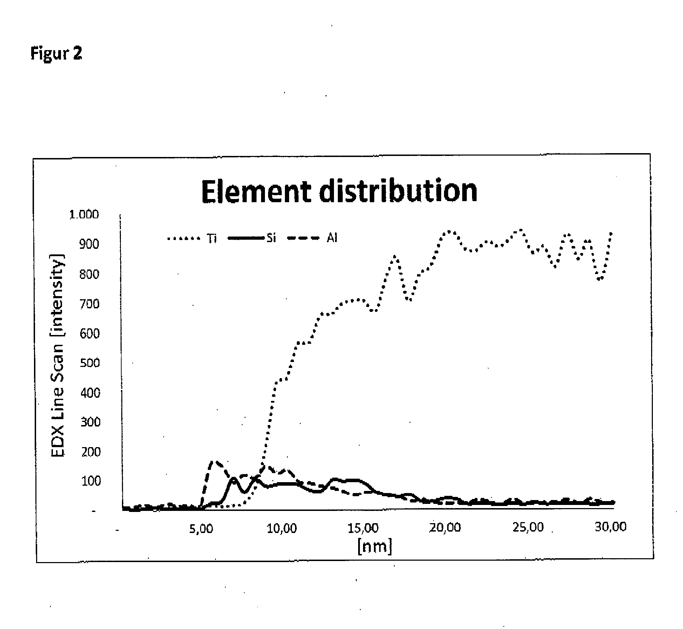

Beispielprobe 4 wurde unter dem Rasterelektronenmikroskop (REM) untersucht und ein 30 nm langer EDX-Linienscan senkrecht zur Oberfläche durch Partikelkern und Partikelbeschichtung aufgenommen (Figur 2).

### Testung

Die hergestellten Pigmentproben wurden bezüglich Aufhellvermögen (TS), mittlere Partikelgröße (d₅₀), Säurelöslichkeit und isoelektrischem Punkt (IEP) getestet. Die entsprechenden Werte sind in der Tabelle angegeben.

**Tabelle:**

| **Probe** | **Behandlung** | **TS** | **d₅₀** | **Säurelöslichkeit** | **IEP** |
|---|---|---|---|---|---|
| Beispiel 1 | nur Trocknung | 102 | 0,30 µm | 13 Gew.-% | 8,5 |
| Beispiel 2 | 400°C, 2 h | 101 | 0,32 µm | 4 Gew.-% | 8,8 |
| Beispiel 3 | 800°C, 1 h | 103 | 0,31 µm | 3 Gew.-% | 8.7 |
| Beispiel 4 | 800°C, 4 h | 101 | 0,32 µm | 2 Gew.-% | 8,8 |
| Vergleichsbeispiel | --- | 98 | 0,33 µm | 13 Gew.-% | 8,1 |

Die Testergebnisse (Tabelle) zeigen, dass mit zunehmender Temperatur bzw. Dauer der Wärmebehandlung die Säurelöslichkeit des erfindungsgemäß behandelten Pigments deutlich abnimmt und der isoelektrische Punkt (IEP) sich zu höheren pH-Werten verschiebt. Gleichzeitig bewirkt die Wärmebehandlung eine Verbesserung des Aufhellvermögens (TS) unter Erhalt der mittleren Partikelgröße.

Es wird vermutet, dass durch die Wärmebehandlung die Hydroxylgruppen auf der Oberfläche der dichten SiO₂-Hülle nach folgender Gleichung weitgehend entfernt werden.

≡ Si-OH + HO-Si≡ → ≡Si-O-Si≡ + H₂O

Durch das Verdampfen des Wassers bei der Wärmebehandlung wird die Kondensation der Oberflächen-Silanolgruppen (≡Si-OH) vervollständigt und die SiO₂-Hülle verdichtet. Die Säurelöslichkeit sinkt. Durch die Verdichtung der SiO₂-Hülle vor der abschließenden Aluminium-Fällung wird verhindert; dass sich eine Mischschicht von SiO₂ und Al₂O₃ bildet. Stattdessen werden die mit SiO₂ umhüllten Partikel von einer dichten, weitgehend geschlossenen Al₂O₃-Schicht umhüllt. Durch die Ausbildung der geschlossenen Al₂O₃-Schicht verschiebt sich der isoelektrische Punkt zu höheren pH-Werten.

Die rasterelektronenmikroskopischen Untersuchungen mit dem EDX-Linienscan zeigen deutlich, dass die herkömmliche Verfahrensweise zu einer äußeren SiO₂-Al₂O₃-Mischschicht führt (Fig. 1: Vergleichsbeispiel), während die erfindungsgemäße Verfahrensweise zu einer weitgehend reinen äußeren Al₂O₃-Schicht führt (Fig. 2: Beispiel 4).

### Testmethoden

### Aufhellvermögen (TS)

Das Aufhellvermögen wurde mit dem MAB-Test gemessen. Dabei wird das zu untersuchende Pigment auf einer Farbenausreibmaschine (Automatic Muller) in eine Schwarzpaste nach DIN 53165 eingearbeitet. Die Pigmentvolumenkonzentration beträgt 17%. Die erzeugte Graupaste wird auf eine Morestkarte aufgetragen, und mit einem Hunter Colorimeter PD-9000 werden die Remissionswerte der sich im nassen Zustand befindlichen Schicht bestimmt. Die daraus abgeleiteten TS-Werte sind auf einen inneren Standard bezogen.

### Mittlere Partikelgröße d₅₀

Die Partikelgrößenverteilung wurde mit Laserbeugung (Mastersizer 2000) gemessen und daraus der d₅₀-Wert (Median der Masseverteilung) ermittelt.

### Säurelöslichkeit:

Eine Suspension aus 500 mg Pigment in 25 ml konzentrierter Schwefelsäure (96 Gew.-%) wird 60 min bei 175°C gehalten. Nach Filtration wird im Filtrat das gelöste TiO₂ mittels ICP-Atomemissionsspektrometrie bestimmt. Je geringer die Konzentration des gelösten TiO₂, desto dichter ist die SiO₂-Hülle auf der Pigmentoberfläche.

### Isoelektrischer Punkt (IEP)

Der isoelektrische Punkt wird an Titandioxidsuspensionen (Konzentration 10 Gew.-%) mit Hilfe einer ESA Sonde bestimmt.

### Rasterelektronenmikroskopische Untersuchungen

Es wurde ein LEO 1530 VP mit einem EDX-Systern der Firma Oxford verwendet.

## Patentansprüche

1. Verfahren zur Oberflächenbeschichtung von anorganischen Partikeln in einer wässrigen Suspension mit einer dichten Siliciumdioxidschicht und mindestens einer weiteren anorganischen Verbindung **dadurch gekennzeichnet, dass** die Partikel nach Aufbringen der Siliciumdioxidschicht aus der Suspension abgetrennt, gewaschen und wärmebehandelt werden und anschließend erneut zu einer wässrigen Suspension angeteigt und mit mindestens einer weiteren anorganischen Verbindung beschichtet werden.

2. Verfahren nach Anspruch 1 **dadurch gekennzeichnet, dass** die Wärmebehandlung bei mehr als 100°C, bevorzugt bei 200 bis 850°C und insbesondere bei 400 bis 800°C stattfindet.

3. Verfahren nach Anspruch 1 oder 2 **dadurch gekennzeichnet, dass** die anorganischen Partikel Pigmentpartikel sind.

4. Verfahren nach einem oder mehreren der Ansprüche 1 bis 3 **dadurch gekennzeichnet, dass**
die anorganischen Partikel Titandioxidpigment-Partikel sind.

5. Verfahren nach einem oder mehreren der Ansprüche 1 bis 4 **dadurch gekennzeichnet, dass**
die mindestens eine weitere anorganische Verbindung Aluminium, Elemente aus der 2. Hauptgruppe oder den Nebengruppen einzeln oder Kombinationen davon enthält.

6. Verfahren nach Anspruch 5 **dadurch gekennzeichnet, dass**
die mindestens eine weitere anorganische Verbindung Elemente aus der Gruppe der Lanthaniden enthält.

7. Verfahren nach einem oder mehreren der Ansprüche 1 bis 6 **dadurch gekennzeichnet, dass**
die mindestens eine weitere anorganische Verbindung ausgewählt ist aus der Gruppe der Oxide, Hydroxide, Carbonate, Phosphate und Sulfide oder Kombinationen davon.

8. Verfahren nach einem oder mehreren der Ansprüche 1 bis 7 **dadurch gekennzeichnet, dass**
die mindestens eine weitere anorganische Verbindung Aluminiumoxid ist.

9. Verfahren nach einem oder mehreren der Ansprüche 1 bis 8 **dadurch gekennzeichnet, dass**
die Wärmebehandlung in einem Sprühtrockner, Etagentrockner, Vibrations-Wirbelschichttrockner, Muffelofen oder Drehrohrofen stattfindet.
